Europäisches Patentamt

European Patent Office

Office européen des brevets

(11) Veröffentlichungsnummer: **0 461 724 A2**

# (12) EUROPÄISCHE PATENTANMELDUNG

(21) Anmeldenummer: **91201435.4**

(51) Int. Cl.5: **G06F 15/16**

(22) Anmeldetag: **11.06.91**

(30) Priorität: **14.06.90 DE 4019040**

(43) Veröffentlichungstag der Anmeldung:
**18.12.91 Patentblatt 91/51**

(84) Benannte Vertragsstaaten:
**DE FR GB**

(71) Anmelder: **Philips Patentverwaltung GmbH**
**Wendenstrasse 35 Postfach 10 51 49**
**W-2000 Hamburg 1(DE)**
(84) **DE**

Anmelder: **N.V. Philips' Gloeilampenfabrieken**

**Groenewoudseweg 1**
**NL-5621 BA Eindhoven(NL)**
(84) **FR GB**

(72) Erfinder: **Schomberg, Hermann, Dr.**
**Isfeldstrasse 18**
**W-2000 Hamburg 55(DE)**

(74) Vertreter: **Poddig, Dieter, Dipl.-Ing. et al**
**Philips Patentverwaltung GmbH**
**Wendenstrasse 35 Postfach 10 51 49**
**W-2000 Hamburg 1(DE)**

(54) **Multirechnersystem.**

(57) Multirechnersysteme bestehen häufig aus einem Netzwerk von Knotenrechnern, die in einer bestimmten Topologie miteinander verbunden sind, und mindestens einem Gastgeberrechner, der das Netzwerk steuert. Zum Durchführen einer Aufgabe lädt der Gastgeberrechner die Knotenrechner mit einem Programm, und anschließend folgen Daten entweder vom Gastgeberrechner oder von einem ggf. auch an das Netzwerk angeschlossenen Peripheriegerät, die nach dem geladenen Programm verarbeitet werden. Um nun zu vermeiden, daß bei der Durchführung mehrerer gleichartiger Aufgaben nacheinander, wie dies beispielsweise bei der Verarbeitung aufeinander folgender Bilder vorkommt, das Netzwerk jeweils erneut geladen werden muß, wird das Netzwerkprogramm derart ausgestaltet, daß alle Knotenrechner einen Zyklus von drei Teilen durchlaufen, wobei im ersten Teil ein Befehl zum Starten einer Aufgabe vom Gastgeberrechner empfangen wird, im zweiten Teil die Durchführung mit Austausch von Datenpaketen zwischen Knotenrechnern erfolgt und im dritten Teil eine Fertigmeldung von allen Knotenrechnern gesammelt wird, wonach alle Knotenrechner einen erneuten Befehl vom Gastgeberrechner erwarten, um eine gleiche oder ähnliche Aufgabe mit neuen Daten durchzuführen. Es werden außerdem verschiedene Methoden der Informationsübertragung im Netzwerk der Knotenrechner beschrieben.

Fig.4

Die Erfindung betrifft ein Multirechnersystem aus mindestens einem Gastgeberrechner und einem Parallelrechner, der aus einem Netzwerk von selbständigen Knotenrechnern besteht, die über getrennte bidirektionale Verbindungsleitungen miteinander verbunden sind und von denen wenigstens ein Knotenrechner mit dem Gastgeberrechner verbunden ist, wobei die einzelnen Knotenrechner wenigstens einen Verteiler und einen Arbeiter enthalten und ein Arbeiter durch einen vom Gastgeberrechner erzeugten Befehl ein entsprechendes Programm oder Teilprogramm ausführt und nur mit dem Verteiler desselben Knotenrechners über eine knoteninterne bidirektionale Verbindungsleitung Informationen austauscht und nur die Verteiler über die Verbindungsleitungen mit anderen Verteilern Informationen austauschen.

Derartige Multirechnersysteme sind allgemein bekannt und dienen zur schnellen und/oder kostengünstigen Lösung von Aufgaben der Datenverarbeitung durch Parallelverarbeitung. Beispiele für derartige Aufgaben sind die Bearbeitung digitaler Bilder oder die Lösung von großen Gleichungssystemen zur Simulation physikalischer Systeme.

Die Grundidee der Parallelverarbeitung besteht darin, das zu bearbeitende Problem auf die Knotenrechner zu verteilen, woraufhin alle Knotenrechner gleichzeitig ihre Teilaufgabe lösen. Wenn die Teilaufgaben kleiner sind, ergibt sich eine schnellere Lösung der Gesamtaufgabe, als wenn sie von nur einem Rechner derselben Geschwindigkeit gelöst würde. Die Teilaufgaben werden im allgemeinen nicht ganz unabhängig voneinander sein, vielmehr wird es nötig sein, Daten von einem Knotenrechner zu einem anderen zu schicken. Dafür sind die bidirektionalen Verbindungsleitungen vorgesehen.

Der Gastgeberrechner übernimmt die Verbindung zur Außenwelt und liefert die Programme, nach denen die Knotenrechner ihre jeweilige Teilaufgabe lösen, und gegebenenfalls auch Daten des zu lösenden Problems. Dafür überträgt er Informationen zum Netzwerk, und zwar über den bzw. die mit ihm verbundenen Knotenrechner, die diese Informationen gegebenenfalls innerhalb des Netzwerks weitersenden. Nachdem alle Knotenrechner ihre Teilaufgabe gelöst haben, kann der Gastgeberrechner dann ebenfalls über die mit ihm direkt verbundenen Knotenrechner die Ergebnisse empfangen. Es ist jedoch auch möglich, mit vorzugsweise anderen Knotenrechnern des Netzwerkes weitere Peripheriegeräte zur Lieferung der zu verarbeitenden Daten und zur Ausgabe der Ergebnisse zu verbinden.

Allgemein wird davon ausgegangen, daß nach der Lösung eines Problems durch das gesamte Netzwerk für die Lösung eines weiteren Problems der Gastgeberrechner erneut die entsprechenden Programme zu den Knotenrechnern überträgt, wodurch im wesentlichen unmittelbar die Ausführung der Teilaufgaben der einzelnen Knotenrechner ausgelöst wird.

Häufig kommt es jedoch vor, daß mehrere Probleme der gleichen Art mit verschiedenen Daten nacheinander gelöst werden sollen. Dabei würde dann nach jeder einzelnen Problemlösung praktisch das gleiche Programm erneut in die Knotenrechner geladen und gestartet. Dies erfordert insbesondere bei Problemen mit weniger zeitaufwendigen Teilaufgaben eine erhebliche Zeit, die für die eigentliche Problemlösung verloren geht. Ein typisches Beispiel für eine Folge gleichartiger oder verwandter Probleme ist die Verarbeitung mehrerer aufeinanderfolgender Bilder in gleicher oder verwandter Weise.

Aufgabe der Erfindung ist es, ein Multirechnersystem der eingangs genannten Art anzugeben, mit dem mehrere aufeinanderfolgende verwandte Probleme mit weniger Zeitaufwand bearbeitet werden können.

Diese Aufgabe wird erfindungsgemäß dadurch gelöst, daß jeder Knotenrechner für jeden Befehl vom Gastgeberrechner einen sich wiederholenden Zyklus aus drei Teilen durchläuft, von denen im ersten Teil als Befehls-Teil der Verteiler einen über eine beliebige Verbindungsleitung empfangenen Befehl des Gastgeberrechners im wesentlichen an alle direkt damit verbundenen Verteiler und an den Arbeiter desselben Knotenrechners weiterleitet, wobei ein Verteiler bei wiederholtem Empfang desselben Befehls die nach dem ersten Empfang folgend empfangenen Befehle nicht weiterleitet, im zweiten Teil als Durchführungs-Teil der Arbeiter die Ausführung des dem vom Verteiler empfangenen Befehls entsprechenden Programms startet und dabei der Verteiler die Weiterleitung eines vom Arbeiter desselben Knotenrechners oder eines über externe Verbindungsleitungen empfangenen Datenpakets anhand von Transportinformation selbständig durchführt, und im dritten Teil als Fertigmeldungs-Teil jeder Verteiler eine Fertigmeldung über eine vorgegebene Verbindungsleitung abgibt, wenn der Arbeiter im selben Knotenrechner und der bzw. die Verteiler in dem oder den Knotenrechner(n) in vorgegebener Nachbarschaft eine Fertigmeldung abgegeben haben, so daß der mit dem Gastgeberrechner verbundene Knotenrechner nur dann eine Fertigmeldung an den Gastgeberrechner abgibt, wenn sein Arbeiter und die Arbeiter aller anderen Knotenrechner eine Fertigmeldung abgegeben haben.

Auf diese Weise ist nur einmal ein Laden des Netzwerkes mit den Programmen für die einzelnen Knotenrechner erforderlich, und diese benötigen dann lediglich jeweils einen neuen Befehl des Gastgeberrechners, um erneut ein Verarbeitungsproblem durchzuführen. Der Gastgeberrechner übermittelt dabei den Befehl an den oder die mit ihm direkt verbundenen Knotenrechner, gegebenenfalls mit Parametern, um die einzelnen Programme durch mit dem Befehl übertragene Parameter zu modifizieren oder auch um unter mehreren Programmen oder Teilprogrammen in jedem Knotenrechner eines auszuwählen. Es ist klar, daß es eine Möglichkeit geben muß, die ein erneutes Laden der Programme der einzelnen Knotenrechner für die Lösung eines andersartigen Problems durch den Gastgeberrechner erlaubt. Das Weiterleiten eines empfangenen Befehls über alle externen Verbindungsleitungen an alle direkt verbundenen Knotenrechner durch den Verteiler jedes Knotenrechners gewährleistet, daß bei einem weiter von dem mit dem Gastgeberrechner verbundenen Knotenrechner entfernt liegenden Knotenrechner kein Datenpaket von einem vorhergehenden Knotenrechner, der den Befehl früher empfangen hat, ankommen kann, da der Befehl auf schnellstmögliche Weise durch das Netzwerk weitergeleitet wird, wobei vorausgesetzt wird, daß Informationen, die nacheinander über dieselbe Verbindungsleitung geschickt wurden, stets ihre Reihenfolge beibehalten. Diese Voraussetzung ist allerdings normalerweise erfüllt, insbesondere wenn keine Pufferspeicher für mehr als eine parallele Information im Übertragungsweg vorgesehen sind.

Der sich wiederholende Zyklus: Befehl-Durchführung-Fertigmeldung braucht nur einmal so programmiert zu werden, daß alle beteiligten Programme der Knotenrechner in kooperierender Weise eine globale "Endlos-Schleife" ausführen, die aus einem "Befehl-Durchführung-Fertigmeldung"-Zyklus besteht und beliebig häufig wiederholt werden kann. Es wird sogar möglich und sinnvoll sein, große Teile dieses sich wiederholenden Zyklus unabhängig von dem konkreten Problem zu gestalten; lediglich das, was ein Befehl auf den Knotenrechnern zur Ausführung bringt, typischerweise ein Teilprogramm, ist problemabhängig, der Rest ein problemunabhängiges Rahmenprogramm. Dieser zyklische Ablauf ist im übrigen unabhängig von der jeweiligen Topologie der Verbindungen der Knotenrechner untereinander in dem Netzwerk.

Die zu lösenden Probleme folgen praktisch nie unmittelbar aufeinander, sondern es liegen mehr oder weniger lange Zeiträume dazwischen, in denen die Knotenrechner auf einen neuen Befehl warten müssen. Ein solcher Wartezustand kann nach einer Ausgestaltung der Erfindung einfach dadurch erreicht werden, daß sich vor Empfang eines Befehls alle Verteiler in einem passiven Zustand befinden, in dem sie sich in einer Programmschleife für ausschließlich den Empfang eines Befehls befinden. Durch die Programmschleife wird auf einfache Weise erreicht, daß der Zeitabstand zwischen einer Fertigmeldung und einem folgenden Befehl beliebig lang sein kann.

Um zuverlässig zu vermeiden, daß ein Knotenrechner, insbesondere wenn er bezüglich seiner Verbindungen weiter von dem Anschluß des Gastgeberrechners entfernt liegt, von einem Knotenrechner, der den Befehl früher erhalten hat, bereits Datenpakete oder Anforderungen von Datenpaketen erhält, bevor er selbst einen Befehl erhalten hat, ist eine weitere Ausgestaltung der Erfindung dadurch gekennzeichnet, daß jeder Verteiler einen empfangenen Befehl zunächst über die entsprechenden Verbindungsleitungen weitersendet und erst dann dem Arbeiter desselben Knotenrechners zuleitet.

Wie bereits eingangs erwähnt, werden allgemein während der Ausführung eines Befehls, also während der Bearbeitung eines Problems, Datenpakete zwischen Knotenrechnern ausgetauscht. Dies erfolgt über die zwischen allen Knotenrechnern vorhandenen Informationswege, die teilweise über dazwischen liegende Knotenrechner bzw. deren Verteiler verlaufen. Bei vielen bekannten Verbindungsarchitekturen weist außerdem jeder Verteiler der Knotenrechner mehrere Anschlüsse auf, so daß zwischen vielen Knotenrechnern mehrere Informationswege über verschiedene andere Knotenrechner existieren, die dieselbe oder eine unterschiedliche Länge haben können, wobei die Länge als Anzahl von Übertragungsschritten bestimmt ist, um ein Datenpaket von dem sendenden Knotenrechner zum Zielknotenrechner zu übertragen. Wenn also der Verteiler eines Knotenrechners ein Datenpaket empfängt, entweder über eine externe Verbindungsleitung von vorzugsweise einem anderen Knotenrechner oder über die interne Verbindungsleitung von dem eigenen Arbeiter, muß möglichst einfach entschieden werden, über welche Verbindungsleitung dieser für einen anderen Knotenrechner bestimmte Datenblock ausgesendet werden muß. Eine einfache Ausgestaltung der Erfindung ist hierfür dadurch gekennzeichnet, daß jedes während der Ausführung eines Befehls zu übertragende Datenpaket am Anfang eine Zielangabe enthält, wohin das Datenpaket zu übertragen ist, und daß jeder Verteiler anhand dieser Zielinformation nach einem lokalen Verfahren bestimmt, über welche Verbindungsleitung das betreffende Datenpaket weiterzuleiten ist. Es ist also nicht erforderlich, daß jedes Datenpaket die gesamte Weginformation mitführen muß. Ein Ziel muß dabei nicht immer ein anderer Knotenrechner, sondern kann auch der Gastgeberrechner oder ggf. ein Peripheriegerät sein.

Ein lokales Verfahren kann ein Algorithmus sein, der aus der Zielangabe und der Nummer bzw. Adresse des lokalen Knotenrechners unter Berücksichtigung der Verbindungstopologie des Netzwerkes die ausgehende Verbindungsleitung bestimmt. Ein besonders einfaches Verfahren besteht nach einer weiteren Ausgestaltung der Erfindung darin, daß das lokale Verfahren in dem Zugriff auf eine in jedem Verteiler gespeicherte individuelle Verbindungsliste besteht, die für jede Zielangabe wenigstens eine Verbindungsangabe dafür enthält, über welche Verbindungsleitung das betreffende Datenpaket weiterzuleiten ist. Ein solcher Zugriff ist besonders schnell ohne Rechnung durchzuführen.

Die Weiterleitung eines Datenpakets sollte möglichst schnell erfolgen. Eine weitere Ausgestaltung der Erfindung ist daher dadurch gekennzeichnet, daß bei jedem Weiterleiten eines Datenpakets gemäß der Verbindungsliste die Entfernung von dem durch die Zielangabe bestimmten Ziel geringer wird. Hierbei können zwar gewisse Blockierungen oder Verzögerungen dadurch auftreten, daß zwei Datenpakete gleichzeitig über die gleiche Verbindungsleitung weitergeleitet werden sollen, was dann nur nacheinander möglich ist, jedoch ist bei der angegebenen zielgerichteten Weiterleitung die Verbindungsliste wesentlich einfacher aufgebaut, als wenn solche Blockierungsmöglichkeiten noch berücksichtigt werden. Dies würde außerdem einen gewissen Rechenaufwand bei der Entscheidung über die Weiterleitung erfordern, was für diese möglicherweise eine Zeitverzögerung bedeuten würde.

Falls jedoch die Verkehrsbelastung von einzelnen Verbindungsleitungen berücksichtigt werden soll, ist eine weitere Ausgestaltung der Erfindung dadurch gekennzeichnet, daß für mindestens einen Teil der Zielangaben mehrere Verbindungsangaben in der Verbindungsliste gespeichert sind und die Auswahl unter den Verbindungsangaben zu einer Zielangabe nach einem vorgegebenen Schema erfolgt. Wie bereits vorher erwähnt, existieren zwischen vielen Knoten mehrere Informationswege über verschiedene andere Knoten, die zumindest teilweise die Übertragung über verschiedene Verbindungsleitungen von einem bestimmten Knotenrechner aus erfordern, und dies kann in den mehreren Verbindungsangaben in der Verbindungsliste berücksichtigt werden. Dann muß also nur eine Auswahl unter diesen mehreren Verbindungsangaben getroffen werden, was mit wenig Zeitaufwand erfolgen kann. Ein Auswahlschema besteht beispielsweise aus einer zyklisch aufeinanderfolgenden Adressierung der Angaben bei jedem folgenden Datenpaket für dasselbe Ziel oder in einer zufallsbedingten Auswahl. Es könnte auch die Verkehrsbelastung berücksichtigt werden.

Bei umfangreichen Netzwerken mit einer großen Anzahl von Knotenrechnern ergibt sich dann jedoch in jedem Verteiler eine relativ lange Liste. Solche größeren Anzahlen von Knotenrechnern werden jedoch für eine wirksamere Verbindungsstruktur untereinander in einer mehrdimensionalen Anordnung bezüglich der Verbindungsleitungen aufgebaut. In diesem Falle kann die Länge der Verbindungsliste in jedem Verteiler dadurch verringert werden, daß bei mehrdimensionaler Anordnung der Knotenrechner bezüglich der Verbindungsleitungen die Zielangabe aus je einer Teilzielangabe für jede Dimension aufgebaut ist und daß jede Verbindungsliste je einen Abschnitt für jede Dimension aufweist, der eine Verbindungsangabe für die betreffende Dimension enthält. Beispielsweise bei einer zweidimensionalen Anordnung in Reihen und Spalten hat die Liste in jedem Verteiler zwei Abschnitte für jeweils die Verbindungen in senkrechter und waagerechter Richtung. Die Reihenfolge der Dimensionen bei der Weiterleitung kann insbesondere dann, wenn die Knotenrechner bezüglich ihrer Verbindungsleitungen nur einfach regelmäßig vermascht sind, weitgehend beliebig sein, d.h. es kann abwechselnd ein Übertragungsschritt in waagerechter und bei dem nächsten Knoten in senkrechter Richtung erfolgen. Bei einer komplexeren Verbindungsstruktur kann es jedoch nach einer weiteren Ausgestaltung der Erfindung zweckmäßiger sein, daß die Verteiler ein Datenpaket in eine für alle Verteiler gleichen Dimension weiterleiten, bis es in dieser Dimension die Zielordinate erreicht hat, und danach in den weiteren Dimensionen entsprechend weiterleiten. Auf diese Weise wird mit Sicherheit ein Weg zum Ziel gefunden, der allerdings nicht notwendigerweise der kürzeste sein muß.

Die Weiterleitung der Fertigmeldung muß so erfolgen, daß automatisch unabhängig von der zeitlichen Reihenfolge, in der die einzelnen Knotenrechner ihre Fertigmeldung abgeben, der mit dem Gastgeberrechner verbundene Knotenrechner nur dann von allen vorgesehenen Nachbarn eine Fertigmeldung erhält, wenn alle diesen vorhergehenden Knotenrechner eine solche Fertigmeldung abgegeben haben. Dafür ist es nach einer weiteren Ausgestaltung der Erfindung zweckmäßig, daß jeder Verteiler eine Fertigmeldung über eine Verbindungsleitung zu einem Knotenrechner weiterleitet, der näher an dem mit dem Gastgeberrechner verbundenen Knotenrechner liegt. Auf diese Weise gibt ein Knotenrechner eine Fertigmeldung nur dann weiter, wenn alle bezüglich des mit dem Gastgeberrechner verbundene Knotenrechners weiter entfernt liegenden Knotenrechner eine Fertigmeldung abgegeben haben. Wenn eine Ringverbindung vorhanden ist, kann auch die umgekehrte Richtung verwendet werden, d.h. die gleiche Richtung, in der der Befehl über das Netz verbreitet wurde, da in dieser Reihenfolge auch die Fertigmeldungen erwartet werden können und diese zum Schluß über die Ringverbindung schnell den mit dem Gastgeberrechner verbundenen Knotenrechner zugeleitet werden kann.

Bei einer großen Anzahl von Knotenrechnern kann die Weiterleitung der Fertigmeldung eine wesentliche Zeit in Anspruch nehmen. Hierfür ist es nach einer weiteren Ausgestaltung der Erfindung zweckmäßig, daß bei mehrdimensionaler Anordnung der Knotenrechner bezüglich der Verbindungsleitungen jeder Verteiler eine Fertigmeldung in Richtung einer für alle Verteiler gleichen Dimension weiterleitet, wenn der in dieser Dimension vorhergehende Verteiler und der eigene Arbeiter eine Fertigmeldung abgegeben haben, bis diese in dem in dieser Dimension ersten Knotenrechner, zu dem auch der bzw. ein mit dem Gastgeberrechner verbundener Knotenrechner gehört, angelangt ist, und daß die Verteiler in diesen Knotenrechnern die Weiterleitung der Fertigmeldung in entsprechender Weise in einer jeweils anderen Dimension vornehmen.

Auf diese Weise wird beim Sammeln der Fertigmeldungen quasi jeweils eine Dimension nach der anderen vollständig abgearbeitet, bis schließlich nur der mit dem Gastgeberrechner verbundene Knotenrechner als letzter die Fertigmeldungen seiner vorgegebenen Nachbarn erhält und an den Gastgeberrechner weiterreichen kann.

Ausführungsbeispiele der Erfindung werden nachstehend anhand der Zeichnung näher erläutert. Es zeigen

Fig. 1a bis 1c     Parallelrechner aus jeweils mehreren Knotenrechnern mit verschiedener Verbindungstopologie,

Fig. 2     eine bezüglich der Verbindungen eindimensionale Anordnung von Knotenrechnern mit mehreren Verbindungen untereinander,

Fig. 3     schematisch den internen Aufbau eines Knotenrechners,

Fig. 4     ein einfach vermaschtes Netz von acht x acht Knotenrechnern.

Für die Verbindung von Knotenrechnern innerhalb eines Parallelrechners, der aus einem Netzwerk von selbständigen Knotenrechnern besteht, bestehen verschiedene Möglichkeiten, die teilweise für bestimmte Probleme besondere Vorteile haben. In Fig. 1a ist beispielsweise eine lineare Anordnung von Knotenrechnern K dargestellt, von denen jeweils zwei benachbarte Knotenrechner über bidirektionale Verbindungsleitungen V miteinander verbunden sind. Der erste und der letzte Knoten sind außerdem miteinander verbunden, so daß die Verbindungsleitungen V mit den Knotenrechnern K einen geschlossenen Ring bilden. An dem Knotenrechner ganz links ist ein Gastgeberrechner H angeschlossen.

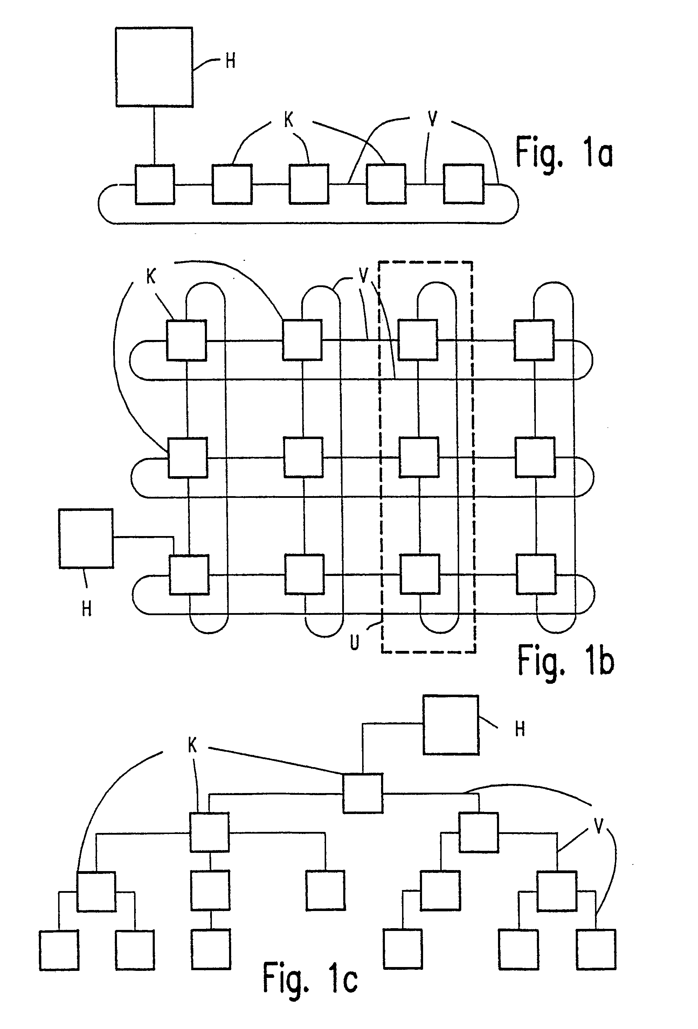

Bei Verwendung einer größeren Anzahl von Knotenrechnern ist eine mehrdimensionale Struktur der Verbindungen zweckmäßig, wie beispielsweise bei der zweidimensionalen Verbindungstopologie gemäß Fig. 1b. Hier sind die Knotenrechner K in einer Matrix angeordnet dargestellt, und die Verbindungen V verbinden jeweils zwei Knotenrechner in waagerechter und senkrechter Richtung. An den Knoten links unten ist wieder ein Gastgeberrechner H angeschlossen. Dabei können die jeweils in waagerechter Richtung in einer Reihe liegenden Knotenrechner oder die in senkrechter Richtung untereinander in einer Spalte liegenden Knotenrechner bezüglich der entsprechenden Verbindungen als jeweils eine Untermatrix aufgefaßt werden, wie beispielsweise die Untermatrix U in Fig. 1b. Diese Verbindungstopologie kann auch auf drei oder mehr Dimensionen ausgedehnt werden, wobei entsprechend mehr Verbindungen zwischen jeweils benachbarten Knotenrechnern bestehen. Es ist klar, daß die Knotenrechner bei einem konkret aufgebauten Multirechnersystem eine andere räumliche Anordnung zueinander haben können, die erwähnten Dimensionen beziehen sich hier wie auch im folgenden nur auf die Verbindungstopologie.

Eine ganz andere Verbindungstopologie, nämlich eine Baumstruktur, ist in Fig. 1c dargestellt. Der oberste Knoten K, der wieder mit dem Gastgeberrechner H verbunden ist, stellt die Wurzel des Baumes dar, die über die Verbindungsleitungen V mit den übrigen Knotenrechnern K verbunden ist, die hier bezüglich mehrerer Verbindungen als in mehreren Ebenen angeordnet betrachtet werden können. Bei dieser Topologie haben alle Knoten außer dem die Wurzel bildenden Knotenrechner genau einen Vater, und alle Knotenrechner außer den in der untersten Ebene liegenden haben einen oder mehrere Söhne.

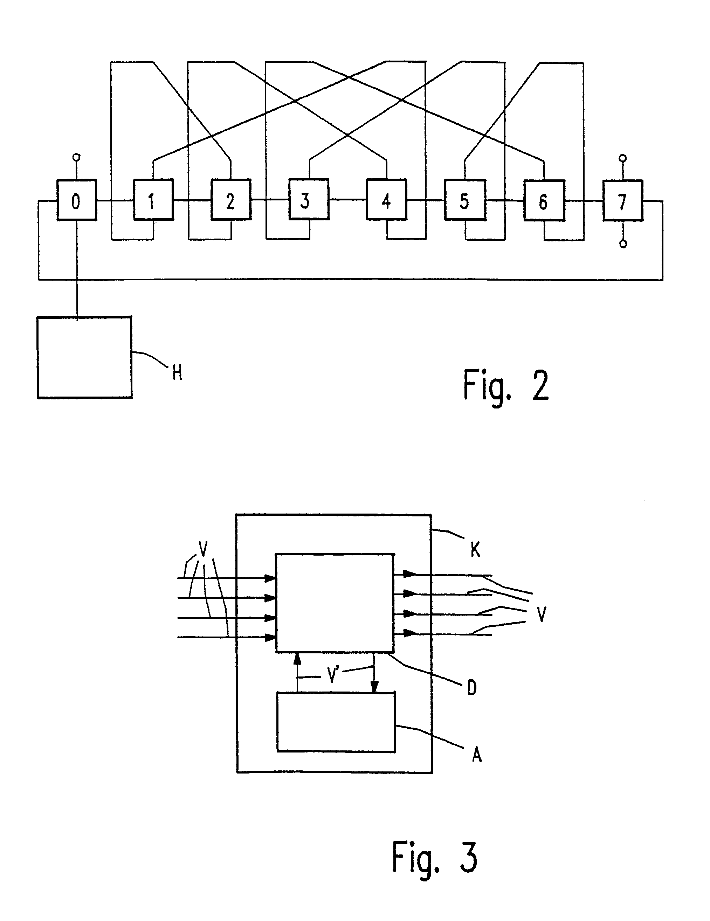

Bei allen vorstehend beschriebenen Verbindungstopologien sind noch weitere Verbindungen zwischen den Knotenrechnern möglich. Eine eindimensionale Verbindungstopologe mit mehreren Verbindungsleitungen zwischen den einzelnen Knotenrechnern zeigt die Fig. 2. Diese stellt die bekannte Perfect-Shuffle-Shift-Topologie dar. Jeder der acht Knotenrechner, die hier von 0 bis 7 numeriert sind, weist vier Anschlüsse auf. Beispielsweise ist der Knotenrechner 3 über die seitlichen Verbindungen mit seinen beiden Nachbarn 2 und 4 verbunden, und ferner ist dieser Knoten über den oberen und unteren Anschluß mit den Knoten 5 und 6 verbunden. Dies führt dazu, daß bei Übertragung einer Information beispielsweise von dem Knotenrechner 1 zum Knotenrechner 5 nur zwei Schritte erforderlich sind, nämlich im ersten Schritt kann ein Datenpaket vom Knotenrechner 1 zum Knotenrechner 4 über die obere Verbindungsleitung übertragen werden, und im nächsten Schritt wird vom Knotenrechner 4 das Datenpaket zum Knotenrechner 5 über die seitliche Shift-Verbindungsleitung übertragen. Bei dieser Verbindungstopologie bleiben an den Knotenrechnern an beiden Enden zwei von den vier Anschlüssen frei, an die vorteilhaft der Gastgeberrechner H oder weitere, nicht dargestellte Peripheriegeräte angeschlossen werden können.

Es sei bemerkt, daß beispielsweise die in Fig. 1b dargestellte matrixförmige Verbindungstopologie auch als eine eindimensionale Topologie betrachtet werden kann, indem die Knoten einfach fortlaufend numeriert werden, wodurch dann ebenfalls zwischen nicht benachbarten Knotenrechnern zusätzliche Verbindungen vorhanden sind.

Bei dem in Fig. 1 und Fig. 2 dargestellten Anordnungen von Knotenrechnern werden diese vom Gastgeberrechner mit einem Programm geladen, und zwar über den mit dem Gastgeber direkt verbundenen Knotenrechner, der die entsprechenden Informationen dann an die anderen Knotenrechner weiterleitet. Die einzelnen Knotenrechner können jeweils aus einem sogenannten Transputer aufgebaut sein oder einen oder mehrere solche Transputer enthalten, und das Betreiben solcher Transputer, beispielsweise auch das Laden mit einem Programm, ist aus entsprechenden Datenblättern des Herstellers solcher Transputer bekannt. Nach dem Laden der Programme werden den Knotenrechnern zu verarbeitende Daten zugeführt, entweder vom Gastgeberrechner oder von nicht dargestellten Peripheriegeräten, die an denselben Knotenrechner wie der Gastgeberrechner oder an einen oder mehrere beliebige andere Knotenrechner angeschlossen sein können.

Für eine genauere Beschreibung des Verarbeitungsablaufs wird zunächst die grobe interne Struktur eines Knotenrechners anhand der Fig. 3 näher erläutert. In den Knotenrechner K führen hier vier Verbindungsleitungen hinein, über die Informationen bitseriell oder auch wortweise bitparallel übertragen werden können, wozu die einzelnen Verbindungsleitungen dann tatsächlich aus entsprechend vielen Drähten bestehen. Entsprechend führen auch vier Verbindungsleitungen V aus den Knotenrechner K heraus. Jeweils eine eingehende und eine ausgehende Verbindungsleitung gehören dabei zusammen und bilden eine bidirektionale Verbindungsleitung.

In dem Knotenrechner K führen die Verbindungsleitungen V auf einen Verteiler D, der außerdem über interne Verbindungsleitungen V', die ebenfalls eine bidirektionale Verbindung bilden, mit einem sogenannten Arbeiter A verbunden ist. Dieser Arbeiter A führt die eigentlichen Programme zur Verarbeitung von Daten aus, während der Verteiler D lediglich die Übertragung von Informationen, insbesondere auch der Datenpakete, verwaltet. Dabei kann jede eingehende Verbindungsleitung V und auch V' mit einer ausgehenden Verbindungsleitung V oder auch V' verbunden werden. Der Verteiler D und der Arbeiter A können getrennte Prozessoren sein, es kann jedoch auch nur ein Prozessor dafür vorgesehen werden, der durch entsprechende Steuerung die Funktion von beiden Teilen übernimmt. Gegebenenfalls kann der Knotenrechner K noch weitere, nicht dargestellte Prozessoren oder andere Elemente enthalten. Wenn der Verteiler D und der Arbeiter A durch einen einzigen Prozessor realisiert werden, ist die Verbindung V' zwischen beiden Teilen D und A nicht real vorhanden, sondern wird durch die Steuerung realisiert.

Der Verteiler D dient also dazu, Informationen wie z.B. Datenpakete, die über die Verbindungen V oder V' eintreffen, auf eine ausgehende Verbindung V oder V' weiterleiten. Dabei kann es vorkommen, daß Informationen an mehreren eingehenden Verbindungsleitungen gleichzeitig anliegen. Diese werden dann nacheinander weitergeleitet.

Jeder Verteiler empfängt über seine eingehenden Verbindungsleitungen nun drei Arten von Informationen, die unterschiedlichen Zwecken dienen und daher unterschiedlich behandelt werden. Diese sind
Befehl,
Datenpaket,
Fertigmeldung.
Zweckmäßig ist, daß das erste Byte einer jeden Information angibt, ob der Rest der Information ein Befehl, ein Datenpaket oder eine Fertigmeldung ist.

Jede dieser Informationsarten tritt in jeweils einem von drei Teilen eines Zyklus auf, der im Netzwerk von jedem Knotenrechner bei jeder Verarbeitungsaufgabe durchlaufen wird. Dafür treten, nachdem das Netzwerk-Programm vom Gastgeberrechner geladen worden ist, alle Verteiler und alle Arbeiter in eine Endlos-Schleife des Programms ein. Dies kennzeichnet den Beginn des Zyklus, bei dem alle Knotenrechner einen Befehl erwarten.

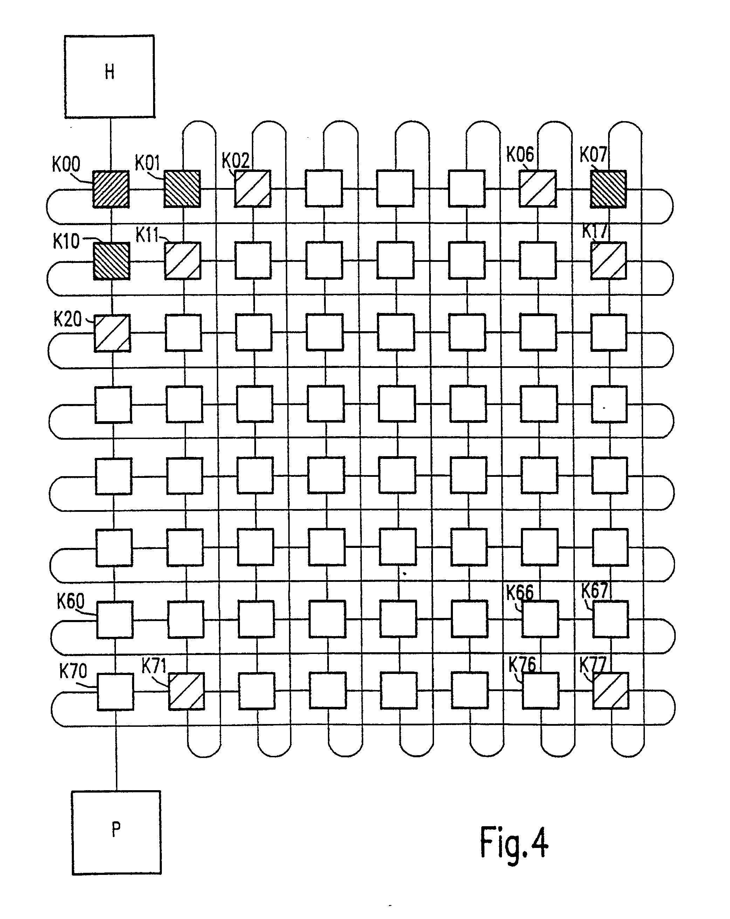

Vom Gastgeberrechner wird nun ein Befehl nebst möglichen Parametern an einen mit ihm direkt verbundenen Knotenrechner geschickt. In Fig. 4 ist dies der Knoten K00, der direkt mit dem Gastgeberrechner H verbunden ist.

Zu Beginn eines Zyklus ist jeder Verteiler "passiv" und wartet auf einen Befehl. Falls nun ein Verteiler passiv ist und einen Befehl von einer externen Verbindungsleitung erhält, geht er in den Zustand "aktiv" über. In Fig. 4 ist dies im ersten Schritt also nur der Knoten K00. Dieser überträgt im ersten Schritt dann den Befehl über alle ausgehenden externen Verbindungsleitungen, so daß nun die Knoten K01, K07 über die Ringverbindung und K10 in den aktiven Zustand übergehen. Im zweiten Schritt übertragen dann diese Knoten den Befehl über alle von diesen Knoten ausgehenden externen Verbindungsleitungen, so daß nun die Knoten K02, K11, K20, K06, K17 und auch die Knoten K71 und K77 über die Ringverbindungen von den Knoten K01 und K07 in den aktiven Zustand übergehen. Dies ist in Fig. 4 durch verschiedene Schraffuren dieser Knoten verdeutlicht. Beim Weitersenden kann im übrigen auch dafür gesorgt werden, daß der Befehl nicht zu dem Knoten gesandt wird, von dem er unmittelbar vorher empfangen worden ist. Beispielsweise braucht der Befehl im zweiten Schritt nicht von den Knoten K01, K08 und K10 zum Knoten K00 zurückgeschickt werden. Es läßt sich bei dieser Art der Befehlsweiterleitung jedoch nicht vermeiden, daß ein Befehl an einen Knoten gelangt, der bereits aktiv ist, wie dies beim Knoten K17 der Fall ist, der sowohl vom Knoten K07 als auch vom Knoten K10 über die Ringverbindung einen Befehl erhält. Diese treffen in diesem Falle zwar gleichzeitig ein, werden jedoch nacheinander verarbeitet, wie früher bereits erwähnt. Nur der erste verarbeitete Befehl bringt dann den Verteiler in den Zustand aktiv und wird normal verarbeitet, d.h. weitergeleitet, während ein Befehl, der an einen bereits aktiven Verteiler gelangt, lediglich akzeptiert, d.h. quittiert wird, damit der Sender diesen Befehl wieder von der Verbindungsleitung nehmen kann, aber sonst ignoriert wird. Es ist jedoch zu erkennen, daß auf diese Weise der Befehl schnellstmöglich vom Knoten K00 an alle anderen Knoten gelangt. Je nach Verbindungstopologie sind dafür unterschiedliche Anzahlen von Schritten notwendig.

Nachdem ein Verteiler den Befehl an alle Nachbarknoten geschickt hat, schickt er ihn als letztes dem lokalen Arbeiter zu. Jeder Arbeiter durchläuft ebenfalls eine Endlos-Schleife, an deren Beginn er jeweils auf einen Befehl von seinem Verteiler wartet. Erhält er einen, so führt er ihn aus. Typischerweise wird der Befehl und seine Parameter dazu benutzt, um ein Unterprogramm (Prozedur, Routine) des Arbeiters zu starten.

Wenn nun ein Arbeiter beginnt, einen Befehl auszuführen, wird er im allgemeinen Daten an andere Arbeiter verschicken und umgekehrt Daten von anderen Arbeitern empfangen wollen. Daten können auch mit dem Gastgeberrechner oder der Peripherie ausgetauscht werden. Dies erfolgt durch die Übertragung eines Datenpaktets. Ein Datenpaket besteht aus mehreren Feldern, von denen das erste zweckmäßigerweise die Zieladresse des Zielknotens ist. Da auch Gastgeberrechner und Peripherie Ziele sein können, haben auch sie eine Adresse. Die Adresse ist einfach eine festgelegte Zahl, die den Adressaten eindeutig kennzeichnet. Bei bis zu 256 möglichen Zielen genügt ein Byte für die Adresse. Jeder Knoten kennt seine eigene Adresse. Weitere Felder eines Datenpaketes können optionale Parameter sowie notwendigerweise die eigentlich zu übermittelnden Daten enthalten.

Ein Datenpaket wird vom Arbeiter an seinen Verteiler weitergereicht, und von nun an übernehmen die Verteiler die Weiterleitung an das Ziel, wo es im Falle eines Knotens an den lokalen Arbeiter, ansonsten an den Gastgeberrechner oder das Peripheriegerät weitergeleitet wird. Aufgrund des erläuterten Verfahrens für das Weiterleiten von Befehlen und der Voraussetzung, daß eine Information auf einem bestimmten Weg nicht von einer nachfolgenden Information überholt werden kann, ist garantiert, daß ein Datenpaket von einem bereits aktiven Knoten nicht vor einem Befehl an einem noch passiven Knoten ankommen kann.

Es ist nun ein Verfahren für das zielstrebige Weiterleiten von Datenpaketen erforderlich. Eine Möglichkeit besteht darin, dem Datenpaket die ganze Weginformation mitzugeben. Jeder Verteiler kann dann diese Information zur Weiterleitung benutzen. Günstiger sind lokale Verfahren, welche die Zieladresse des Datenpakets und die Adresse des Knotens, wo es sich gerade befindet, benutzen.Für manche Verbindungstopologien, z.B. n-dimensionale Gitter oder Torus oder Hyperwürfel, gibt es lokale Alogrithmen für die Weiterleitung.

Die hier benutzte Methode besteht darin, die Weiterleitungs-Information in einer lokalen Tabelle zu speichern. Zur Verdeutlichung wird eine lineare Durchnumerierung der Knoten und der anderen Ziele angenommen, was bei einer Verbindungstopologie entsprechend einer n-dimensionalen Matrix immer möglich ist. Es gibt dann insgesamt M mögliche Zieladressen, m=0,...M-1. Dann enthält jeder Verteiler eine Tabelle der Länge M, deren m-ter Eintrag angibt, wohin ein Paket an diesem aktuellen Knoten als nächstes zu schicken ist, wenn es nach Zielnummer m gelangen soll. Zweckmäßigerweise wird jeder lokale Schritt so gewählt, daß die Entfernung zum Ziel immer um einen Schritt verkleinert wird. Auf diese Weise wird erreicht, daß das Paket entlang eines kürzesten Pfades weitergeleitet wird, denn bei jedem Schritt wird die Entfernung um 1 verkürzt, so daß das Paket mit Sicherheit und auch schnellstmöglich ankommt.

Derartige Tabellen können bei bekannter Verbindungstopologie des Netzwerkes unmittelbar daraus bestimmt und dann in den Verteilern fest gespeichert werden. Dies gilt für alle Verbindungstopologien. Der Zugriff in einer Tabelle ist im übrigen mit besonders wenig Zeitaufwand durchzuführen. Die Tabellen der Verteiler aller Knotenrechner des Netzwerkes können als Matrix aufgefaßt werden, und eine derartige Matrix für das in Fig. 2 dargestellte Netzwerk ist in der folgenden Tabelle angegeben.

|  |  | Ziel |
| --- | --- | --- |
|  |  | 0 1 2 3 4 5 6 7 |
|  | 0 | W,R,R,L,R,L,L,L,   S,U,L,L |
| aktueller | 1 | L,W,S,R,U,U,R,L,   L,L,L,L |
| Knoten | 2 | L,U,W,R,S,S,R,L,   L,L,L,L |
|  | 3 | R,L,L,W,R,U,S,S,   R,R,S,S |
|  | 4 | S,S,U,L,W,R,R,L,   S,S,L,L |
|  | 5 | R,L,S,S,L,W,U,R,   R,R,R,R |
|  | 6 | R,L,U,U,L,S,W,R,   R,R,R,R |
|  | 7 | R,R,R,L,R,L,L,W,   R,R,S,U |

Darin bedeutet W, daß der Verteiler das empfangene Datenpaket seinem eigenen Arbeiter zuführt, d.h. das Datenpaket ist im Zielknoten angekommen. R bedeutet, daß ein Datenpaket zum rechten Nachbarn weitergeleitet wird, und L das Weiterleiten zum linken Nachbarn. S bedeutet das Weiterleiten über den unteren Ausgang jedes Knotens in Fig. 2 und U das Weiterleiten über den oberen Ausgang. Die Spalten geben in der Matrix die Zieladresse an und die einzelnen Zeilen die jeweiligen Knotennummern. Die rechten vier Spalten der Matrix geben die freien Ausgänge der Knoten 0 und 7 bzw. den Gastgeberrechner H an. Wenn also ein Datenpaket vom Knoten 1 zum Knoten 5 weitergeleitet werden soll, wird dieses Datenpaket vom Verteiler des Knotens 1 über den oberen Eingang abgegeben, wie durch das U in der Zeile 1 und der Spalte 5 angegeben ist, und gelangt damit zum Knoten 4. Vom Knoten 4 wird es am rechten Ausgang abgegeben, wie in der Zeile 4 und der Spalte 5 angegeben ist, und gelangt damit zum Knoten 5. Nach Zeile 5, Spalte 5 leitet der darin befindliche Verteiler das Datenpaket dem eigenen Arbeiter zu, weil dies der Zielknoten ist. Die Matrix beschreibt zusammen mit den physikalisch vorhandenen Verbindungsleitungen die Verbindungstopologie des Netzwerkes. Bei verschiedenen Netzwerken braucht dann im wesentlichen nur diese Matrix geändert zu werden, die übrige Verbindungsprozedur kann praktisch unverändert bleiben.

Häufig gibt es mehrere Wege, die von einem sendenden Knoten zu einem Zielknoten führen und die zumindest teilweise auch die gleiche Länge haben, wie sich beispielsweise aus der Anordnung gemäß Fig. 4 unmittelbar ergibt, wenn beispielsweise sendender Knoten und Zielknoten in diagonaler Richtung über mehrere Knoten voneinander entfernt liegen, wobei angenommen wird, daß nur die angegebenen Verbindungen, jedoch keine diagonalen Verbindungen vorhanden sind. Insbesondere in einem solchen Falle sind die Tabellen in den Verteilern der verschiedenen Knoten so aufgebaut, daß bei den häufigsten Problemen eine annähernd gleiche Belastung aller Verbindungsleitungen auftritt. Damit können Stausituationen oder Blockierungen wenigstens vermindert werden. Es ist jedoch auch möglich, daß die Tabelle zumindest für einige Zielknoten mehrere Einträge pro Ziel enthält, von denen einer nach einem Verfahren ausgewählt wird, das die Übertragungsbelastung der einzelnen Verbindungsleitungen berücksichtigt. Dabei kann es möglicherweise zweckmäßig sein, daß bei einer Weiterleitung der Abstand zum Zielknoten ausnahmsweise einmal nicht verkürzt wird, wenn auf diese Weise eine Stausituation vermieden werden kann.

Eine Verkürzung der Tabellen wird erreicht, wenn die Knotenrechner in einer mehrdimensionalen Verbindungstopologie miteinander verbunden sind, wie beispielsweise die zweidimensionalen Verbindungen der Anordnung nach Fig. 4, indem jede Zieladresse nicht linear durchnumeriert ist, sondern die Zieladresse in einen Abschnitt für jede Dimension unterteilt ist. Wenn $N_k$ die Anzahl der Knoten in der k-ten Dimension ist, wird pro Verteiler nicht eine Tabelle der Länge $N_1 \cdot N_2 \cdot ... N_n$ + Anzahl der äußeren Ziele, sondern n Tabellen der Länge $N_k$ + Anzahl der äußeren Ziele gespeichert. Es reichen also $N_1 + N_2 + ... N_n + p$ (p = Anzahl der äußeren Ziele) Einträge aus, was im allgemeinen viel weniger als bei der linearen Durchnumerierung ist. Die k-te Tabelle eines betrachteten Verteilers enthält damit die Routing-Information für dasjenige eindimensionale Untergitter entlang der k-ten Dimension, zu der der betrachtete Verteiler gehört. Sie beschreibt einfach wie im eindimensionalen Fall das Routen entlang dieses eindimensionalen Untergitters. Sie kann daher auch a priori ermittelt werden. Weil aber ihre Länge kürzer ist,ist ihre Ermittlung praktikabler als die Ermittlung einer einzigen Tabelle der Länge für lineare Durchnumerierung.

Bei Vorliegen von n Tabellen kann das Weiterleiten etwa wie folgt erfolgen:

Ist $(i_1^Z, i_2^Z, ...,i_n^Z)$ die Zieladresse und $(i_1^S, i_2^S, ...,i_n^S)$ die Startadresse, so wird zunächst entlang der ersten Dimension weitergeleitet, bis der Knoten $(i_1^Z, i_2^S, ...,i_n^S)$ erreicht ist, dann entlang der zweiten Dimension usw.. Die Reihenfolge der Dimensionen darf auch anders sein.

Bei manchen Topologien, z.B. einem reinen n-dimensionalen Gitter oder Torus, ist es nicht einmal nötig, alle Schritte in einer Dimension hintereinander zu tun, sondern es kann jedesmal irgendeine Dimension ausgewählt und ein Schritt in diese Richtung ausgeführt werden.

Nachdem nun ein lokaler Arbeiter seinen Befehl ausgeführt hat, könnte er an sich den nächsten Befehl empfangen, also wieder zum Beginn seiner Endlos-Schleife zurückkehren. Es muß jedoch noch vorher auf geeignete Weise festgestellt, daß alle Arbeiter fertig sind, und dieses durch den mit dem Gastgeberrechner direkt verbundenen Knoten diesem mitgeteilt werden. Auch muß der Status des fertigen Knotens von "aktiv" nach "passiv" zurückgesetzt werden, so daß auch die Verteiler der Knoten an den Anfang ihrer Endlos-Schleife zurückkehren können. Dies alles wird durch die "Fertigmeldung" erreicht. Im einfachsten Fall besteht diese Meldung aus einem einzigen Byte, dem mit der Bedeutung "Fertig". Diese Meldung wird von einem fertigen Arbeiter an seinen Verteiler weitergereicht, der nun in den Zustand "passiv" geht.

Für die weitere Beschreibung wird nun zunächst ein eindimensionales Verbindungsmuster wie z.B. in Fig. 1a oder Fig. 2 angenommen mit N-1 als letzten Knoten. Falls dieser letzte Knoten fertig ist, sendet er die Fertigmeldung an seinen "linken" Nachbarn N-2. Dieser Verteiler wartet nun darauf, daß sowohl sein rechter Nachbar N-1 als auch sein lokaler Arbeiter fertig sind. Dann und nur dann schickt er die Fertigmeldung zu seinem linken Nachbarn N-3, wo sich dieser Vorgang wiederholt. Nach N-1 Schritten kommt die Fertig-Meldung beim Knoten 0 an, der schließlich den Gastgeberrechner benachrichtigt, sofern Arbeiter 0 auch schon fertig ist.

Falls z.B. Knoten 0 mit N-1 zum geschlossenen Ring verbunden ist, kann das Weiterleiten der Fertigmeldung auch von "links nach rechts" (0, 1, ...N-1) erfolgen, wobei Knoten N-1 über die Ringverbindung wiederum seinen Nachbarn 0 benachrichtigt und der den Gastgeberrechner.

Bei einer n-dimensionalen Verbindungstopologie (n>1), kann der Vorgang beschleunigt werden, indem zunächst alle Fertigmeldungen aller eindimensionalen Untergitter der n-ten Dimension in allen Knoten der Form $(i_1, i_2...i_n-1, 0)$ gesammelt werden, sodann alle Fertigmeldungen der eindimensionalen Untergitter der Form $(i_1, i_2...i_{n-2},^*,0)$ in den Knoten der Form $i_1, i_2, ...i_{n-2},0,0$, usw., bis zum Schluß die Fertigmeldung am Knoten $(0,0,...0)$ ankommt, der dann den Gastgeberrechner informiert. Bezogen auf die in Fig. 4 dargestellte Anordnung bedeutet dies, daß beispielsweise die Fertigmeldungen der Knoten K77, K76 ... K71 im Knoten K70 gesammelt werden wie bei einer eindimensionalen Anordnung, entsprechend die Fertigmeldungen der Knoten K67, K66 usw. im Knoten K60 bis zu dem Knoten K07, K06 ... K02 und K01, deren Fertigmeldungen im Knoten K00 gesammelt werden. Die Knoten K70, K60 ... K20 und K10 sammeln nun ihrerseits wie im eindimensionalen Fall die Fertigmeldungen, bis schließlich auch in dieser Richtung im Knoten K00 die Fertigmeldung eintrifft, und nun erst leitet dieser die Fertigmeldung an den Gastrechner H weiter. Es ist auch möglich, die Fertigmeldungen der Knotenrechner zunächst spaltenweise in der obersten Zeile und dann in dieser obersten Zeile zum Knoten K00 zu sammeln. Auch ist es möglich, die Fertigmeldungen in den Knotenrechnern K07, K17 ... K67 und K77 der rechten Spalte zu sammeln, und dann die Fertigmeldung dieser Spalte im Knoten K07, von wo aus diese über die Ringverbindung zum Knoten K00 und dann zum Gastgeberrechner H übertragen wird. Das Sammeln der Fertigmeldungen nacheinander über die einzelnen Dimensionen ist häufig schneller als wenn jeder Knoten auf die Fertigmeldungen von Knotenrechnungen in bestimmter Nachbarschaft wartet, beispielsweise bei zweidimensionaler Anordnung auf den rechten und den unteren Nachbarknoten, d.h. bezogen auf Fig. 4, wenn der Knoten K66 auf die Fertigmeldungen der Knoten K76 und K67 wartet usw.

Bei Bäumen kann man von allen Endknoten ausgehen; diese benachrichtigen ihre Väter; ein Vater wartet, bis er selbst und alle seine Söhne fertig sind, und benachrichtigt dann seinerseits seinen Vater. Nach endlich vielen Schritten kommt die Fertigmeldung an der Wurzel an, die dann den Gastgeberrechner benachrichtigt.

Nachdem nun der Knoten K00 die Fertigmeldung an den direkt mit ihm verbundenen Gastgeberrechner H übermittelt hat, sind nun alle Knotenrechner im Zustand "passiv" und warten auf einen neuen Befehl vom Gastgeberrechner. Dabei ist also kein erneutes Laden des gesamten Netzwerkes mit Programmen erforderlich.

Ergänzend können noch folgende Möglichkeiten vorgesehen werden. Es kann bei bestimmten Problemlösungen vorkommen, daß zu einem bestimmten Zeitpunkt von einem Knotenrechner dieselben Daten an alle anderen Knotenrechner übertragen werden sollen. Dies könnte wie die beschriebene Übertragung der Datenpakete erfolgen, d.h. es wird dasselbe Datenpaket nacheinander wiederholt mit jeweils einer anderen Adresse ausgesandt, jedoch erfordert dies viel Zeit. Günstiger ist es, im ersten Byte des Datenpakets, das wie erwähnt die Art der übertragenen Information angibt, einen anderen Wert, d.h. eine andere Bitkombination zu verwenden und statt dessen keine Zieladresse, und alle empfangenden Verteiler leiten dieses Datenpaket wie einen Befehl an den eigenen Arbeiter und an alle direkt verbundenen Verteiler weiter. Dabei muß ebenso wie bei der Weiterleitung der Befehle die Möglichkeit des doppelten Empfangs des Datenpakets über verschiedene Wege berücksichtigt werden. Auf diese Weise kann ein solches "an alle" Datenpakete schnell übertragen werden.

Eine andere Möglichkeit ist, das Netzwerk in den vollständigen Ruhezustand zu versetzen, also auch die Warteschleife zu beenden. Dies kann durch einen speziellen Befehl, der auch durch ein anderes erstes Byte gekennzeichnet sein kann, oder durch einen speziellen Parameterwert bei dem normalen Befehl erfolgen. Dabei ist aber zu berücksichtigen, daß der endgültige Ruhezustand erst eingenommen wird, wenn eine dazugehörige Fertigmeldung für das Einstellen dieses Ruhezustands weitergeleitet worden ist.

## Patentansprüche

1. Multirechnersystem aus mindestens einem Gastgeberrechner und einem Parallelrechner, der aus einem Netzwerk von selbständigen Knotenrechnern besteht, die über getrennte bidirektionale Verbindungsleitungen miteinander verbunden sind und von denen wenigstens ein Knotenrechner mit dem Gastgeberrechner verbunden ist, wobei die einzelnen Knotenrechner wenigstens einen Verteiler und einen Arbeiter enthalten und ein Arbeiter durch einen vom Gastgeberrechner erzeugten Befehl ein entsprechendes Programm oder Teilprogramm ausführt und nur mit dem Verteiler desselben Knotenrechners über eine knoteninterne bidirektionale Verbindungsleitung Informationen austauscht und nur die Verteiler über die Verbindungsleitungen mit anderen Verteilern Informationen austauschen, dadurch gekennzeichnet, daß jeder Knotenrechner für jeden Befehl vom Gastgeberrechner einen sich wiederholenden Zyklus aus drei Teilen durchläuft, von denen im ersten Teil als Befehls-Teil der Verteiler einen über eine beliebige Verbindungsleitung empfangenen Befehl des Gastgeberrechners im wesentlichen an alle direkt damit verbundenen Verteiler und an den Arbeiter desselben Knotenrechners weiterleitet, wobei ein Verteiler bei wiederholtem Empfang desselben Befehls die nach dem ersten Empfang folgend empfangenen Befehle nicht weiterleitet, im zweiten Teil als Durchführungsteil der Arbeiter die Ausführung des dem vom Verteiler empfangenen Befehls entsprechenden Programms startet und dabei der Verteiler die Weiterleitung eines vom Arbeiter desselben Knotenrechners oder eines über externe Verbindungsleitungen empfangenen Datenpakets anhand von Transportinformation selbständig durchführt, und im dritten Teil als jeder Verteiler eine Fertigmeldung über eine vorgegebene Verbindungsleitung abgibt, wenn der Arbeiter im selben Knotenrechner und der bzw. die Verteiler im Knotenrechner in vorgegebener Nachbarschaft eine Fertigmeldung abgegeben haben, so daß der mit dem Gastgeberrechner verbundene Knotenrechner nur dann eine Fertigmeldung an den Gastgeberrechner abgibt, wenn sein Arbeiter und die Arbeiter aller anderen Knotenrechner eine Fertigmeldung abgegeben haben.

2. Multirechnersystem nach Anspruch 1, dadurch gekennzeichnet, daß sich vor Empfang eines Befehls alle Verteiler in einem passiven Zustand befinden, in dem sie sich in einer Programmschleife für ausschließlich den Empfang eines Befehls befinden.

3. Multirechnersystem nach Anspruch 1 oder 2, dadurch gekennzeichnet, daß jeder Verteiler einen empfangenen Befehl zunächst über die entsprechenden Verbindungsleitungen weitersendet und erst dann dem Arbeiter desselben Knotenrechners zuleitet.

4. Multirechnersystem nach einem der Ansprüche 1 bis 3, dadurch gekennzeichnet, daß jedes während der Ausführung eines Befehls zu übertragende Datenpaket am Anfang eine Zielangabe enthält, wohin das Datenpaket zu übertragen ist, und daß jeder Verteiler anhand dieser Zielinformation nach einem lokalen Verfahren bestimmt, über welche Verbindungsleitung das betreffende Datenpaket weiterzuleiten ist.

5. Multirechnersystem nach Anspruch 4, dadurch gekennzeichnet, daß das lokale Verfahren in dem Zugriff auf eine in jedem Verteiler gespeicherte individuelle Verbindungsliste besteht, die für jede Zielangabe wenigstens eine Verbindungsangabe dafür enthält, über welche Verbindungsleitung das betreffende Datenpaket weiterzuleiten ist.

6. Multirechnersystem nach Anspruch 5,
   dadurch gekennzeichnet, daß bei jedem Weiterleiten eines Datenpakets gemäß der Verbindungsliste die Entfernung von dem durch die Zielangabe bestimmten Ziel geringer wird.

7. Multirechnersystem nach Anspruch 5 oder 6,
   dadurch gekennzeichnet, daß für mindestens einen Teil der Zielangaben mehrere Verbindungsangaben in der Verbindungsliste gespeichert sind und die Auswahl unter den Verbindungsangaben zu einer Zielangabe nach einem vorgegebenen Schema erfolgt.

8. Multirechnersystem nach einem der Ansprüche 4 bis 7,
   dadurch gekennzeichnet, daß bei mehrdimensionaler Anordnung der Knotenrechner bezüglich der Verbindungsleitungen die Zielangabe aus je einer Teilzielangabe für jede Dimension aufgebaut ist und daß jede Verbindungsliste je einen Abschnitt für jede Dimension aufweist, der eine Verbindungsangabe für die betreffende Dimension enthält.

9. Multirechnersystem nach Anspruch 8,
   dadurch gekennzeichnet, daß die Verteiler ein Datenpaket in eine für alle Verteiler gleichen Dimension weiterleiten, bis es in dieser Dimension die Zielordinate erreicht hat, und danach in den weiteren Dimensionen entsprechend weiterleiten.

10. Multirechnersystem nach einem der vorhergehenden Ansprüche,
    dadurch gekennzeichnet, daß jeder Verteiler eine Fertigmeldung über eine Verbindungsleitung zu einem Knotenrechner weiterleitet, der näher an dem mit dem Gastgeberrechner verbundenen Knotenrechner liegt.

11. Multirechnersystem nach Anspruch 10,
    dadurch gekennzeichnet, daß bei mehrdimensionaler Anordnung der Knotenrechner bezüglich der Verbindungsleitungen jeder Verteiler eine Fertigmeldung in Richtung einer für alle Verteiler gleichen Dimension weiterleitet, wenn der in dieser Dimension vorhergehende Verteiler und der eigene Arbeiter eine Fertigmeldung abgegeben haben, bis diese in dem in dieser Dimension ersten Knotenrechner angelangt ist, und daß die Verteiler in diesen Knotenrechnern die Weiterleitung der Fertigmeldung in entsprechender Weise in einer jeweils anderen Dimension vornehmen.

Fig. 1a

Fig. 1b

Fig. 1c

Fig. 2

Fig. 3

Fig.4